(19) Europäisches Patentamt / European Patent Office / Office européen des brevets

(11) **EP 4 148 288 A1**

(12) **EUROPEAN PATENT APPLICATION**
published in accordance with Art. 153(4) EPC

(43) Date of publication:
**15.03.2023 Bulletin 2023/11**

(21) Application number: **21799620.6**

(22) Date of filing: **26.02.2021**

(51) International Patent Classification (IPC):
**F16B 43/00** (2006.01)

(52) Cooperative Patent Classification (CPC):
**F16B 43/00**

(86) International application number:
**PCT/JP2021/007321**

(87) International publication number:
**WO 2021/225021 (11.11.2021 Gazette 2021/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.05.2020 PCT/JP2020/018629**

(71) Applicant: **Nippon Plarad Co.
Kobe-shi, Hyogo, 651-2404 (JP)**

(72) Inventor: **SAEKI Hiroshi
Kobe-shi Hyogo 651-2404 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **WASHER AND FASTENING STRUCTURE**

(57)    Provided are a washer that has a non-rotating function and does not damage an attachment surface at the time of fastening and loosening without increasing the number of components, and a fastening structure that prevents accompanying rotation of a bolt by applying the non-rotating function.

Disclosed is a washer 1 is used by being sandwiched between an attachment surface Sa of an object S to be attached and a nut 2 or a bolt head. A first annular protrusion 3 is formed on a side of the attachment surface Sa. An inner shape of the first annular protrusion 3 is larger than an outer shape of the nut 2 or the bolt head.

FIG. 1

**Description**

Technical Field

The present invention relates to a washer and a fastening structure.

Background Art

Generally, a bolt or a nut is used when an object to be attached is attached to an attachment object. In this case, although fastening is performed by rotating the bolt or the nut, the size is not limited, and a lower surface of the bolt or the nut is rubbed against an attachment surface (seat surface) of the object to be attached. As the fastening is tightly fastened, the force of rubbing the attachment surface increases; therefore, when a paint is applied to the attachment surface, the paint may be peeled off, and the attachment surface under the paint may be rubbed.

In this case, the attachment surface is rough, and if it gets worse, the surface becomes uneven. Thus, a commodity value of a product attached using the bolt or the nut is lowered.

Although the bolt or the nut may be frequently repeatedly loosened and tightened for maintenance or the like, even in such a case, the attachment surface may be rough, and a component at a portion constituting the attachment surface may need to be replaced, or the attachment surface may need to be repaired cleanly.

As one means for solving this problem, it is conceivable to avoid direct contact by performing fastening by sandwiching a flat washer (flat round washer) between a head of the bolt or the nut and the attachment surface. However, in practice, when the bolt or the nut is tightly fastened, the flat washer also co-rotates with the bolt or the nut, and there is a risk that the flat washer damages the attachment surface even if there is a difference in degree.

Thus, it has been proposed to perform fastening by sandwiching a rubber washer between a flat washer and an attachment surface (see, for example, Patent Literature 1).

Citation List

Patent Literature

Patent Literature 1: JP 60-98210 A

Summary of Invention

Technical Problem

However, in the technique described in Patent Literature 1, an extra component as is the rubber washer is required, and the number of components increases.

Thus, an object of the present invention is to provide a washer and a fastening structure that do not damage an attachment surface at the time of fastening and loosening without increasing the number of components.

Solution to Problem

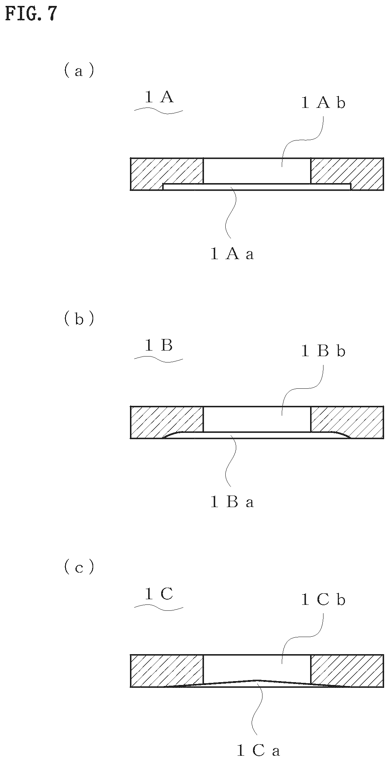

The invention of claim 1 is a washer that is used by being sandwiched between an attachment surface of an object to be attached and a nut or a bolt head, the washer including: a washer body; and a central recess formed on a side of the attachment surface of the washer body, wherein an inner shape of the central recess is equal to or larger than an outer shape of the nut or the bolt head. Here, the central recess includes a recess having a recess shape that is merely recessed from a flat surface without having a protruding portion from the flat surface as illustrated in FIGS. 7(a) to 7(c).

Thus, when the nut or the bolt is tightened and loosened, the washer does not co-rotate, and it is possible to avoid damaging the attachment surface of the object to be attached.

As described in claim 2, it is preferable that a first annular protrusion is formed on the attachment surface side of the washer body, and the central recess is formed by the first annular protrusion.

Thus, the central recess can be easily formed on the attachment surface side of the washer body using the first annular protrusion.

As described in claim 3, the washer is desirable to be integrally molded with the nut or the bolt head.

Thus, since the washer is a part of the nut or the bolt head, handling becomes easy.

In these cases, as described in claim 4, it is desirable that a second annular protrusion is formed on a side of the nut or the bolt head of the washer body, and an outer shape of the second annular protrusion is equal to or smaller than the outer shape of the nut or the bolt head.

As described in claim 5, it is desirable that the nut or bolt head side of the washer body is a flat surface.

As described in claim 6, it is desirable that a surface of the washer body on the nut or bolt head side is formed with a recess having a shape corresponding to the nut or the bolt head as viewed from a direction orthogonal to the surface and in which the nut or the bolt head is fitted.

Thus, idle rotation of the nut or the bolt is avoided by the recess.

As described in claim 7, it is desirable that a side protrusion is provided on at least one of left and right side portions on the nut or bolt head side of the washer body, and a side surface on a center side of the side protrusion is a surface that restricts rotation of the nut or the bolt.

As described in claim 8, it is desirable that side protrusions are provided at the left and right side portions on the nut or bolt head side of the washer body, a linear recess is formed between the side protrusions, and a width of the recess is the same as or slightly larger than a width (so-called two-face width) of the nut or bolt head.

In addition, as described in claim 9, it is more desirable that the side protrusion is formed such that a height of an upper surface gradually decreases in a counterclockwise direction.

As described in claim 10, the first annular protrusion desirably has a height of about 0.2 to 1.0 mm.

Thus, processing is easy.

As described in claim 11, it is desirable that a spline-shaped or polygonal unevenness into which a fitting portion of a tightening tool is detachably fitted is formed around the washer body.

Thus, a tightening work is facilitated.

The invention of claim 12 is a fastening structure that is attached by sandwiching a washer between an attachment surface of an object to be attached and a nut or a bolt head, wherein the washer is the washer according to any one of claims 1 to 6.

Thus, the attachment surface of the object to be attached is not damaged by co-rotation of the washer at the time of fastening and loosening by the nut or the bolt. In addition, the number of components is not increased.

The invention of claim 13 is obtained by applying a function of not rotating with respect to the previous washer that does not co-rotate, that is, the attachment surface. That is, the present invention is a fastening structure that fixes an object to be attached to an attachment object using a nut and a bolt, in which a washer in which a central recess having a diameter larger than an outer shape of the nut or bolt head is formed on a lower side of one of the nut and the bolt head on a side opposite to the nut or the bolt head is provided, and another washer in which a linear recess is formed on a side of the nut or the bolt head on a lower side of the other of the nut and the bolt head and a width of the recess is the same as or slightly larger than a width of the nut or the bolt head is provided.

Thus, at the time of fastening and loosening by the nut or the bolt, the attachment surface of the object to be attached is not damaged by co-rotation of the washer, and at the same time, idle rotation of the nut or the bolt is avoided.

The invention of claim 14 is a fastening structure that fixes an object to be attached to an attachment object using a nut and a bolt, in which on a lower side of one of the nut and the bolt head, a first washer having unevenness on front and back surfaces is provided on a side of the nut or the bolt head, a second washer is provided between the first washer and the object to be attached, in the second washer, an annular recess having, on a tip surface, unevenness to be engaged with unevenness of the first washer is formed in the first washer, and a central recess having an inner shape equal to or larger than an outer shape of the nut or the bolt head is formed on a side of the object to be attached.

Advantageous Effects of Invention

In the present invention, it is possible not only to avoid damaging the attachment surface of the object to be attached at the time of fastening and loosening without increasing the number of components, but also to avoid accompanying rotation of the bolt head when fastening and loosening by combining the bolt and the nut. Brief Description of Drawings

FIG. 1 is a cross-sectional view illustrating a fastening structure using a washer according to Embodiment 1 of the present invention.

FIG. 2 is a cross-sectional view taken along line II-II in FIG. 1.

FIG. 3 is a cross-sectional view taken along line III-III in FIG. 1.

FIG. 4 is a perspective view of an upper surface side of the washer.

FIG. 5 is a perspective view of a lower surface side of the washer.

FIGS. 6(a), 6(b), and 6(c) are explanatory views of scratches on an attachment surface.

FIGS. 7(a), 7(b), and 7(c) are views each illustrating a modification.

FIG. 8 is a view illustrating an example of co-rotation prevention tool.

FIG. 9 is a perspective view of the lower surface side of the washer.

FIG. 10 is a perspective view of the upper surface side of the washer.

FIG. 11 is a cross-sectional view illustrating a fastening structure using a washer according to Embodiment 2 of the present invention.

FIG. 12 is a cross-sectional view illustrating the fastening structure using the washer according to Embodiments 1 and 2 of the present invention.

FIG. 13 is a view illustrating another embodiment of the washer.

FIGS. 14(a), 14(b), and 14(c) are views illustrating other embodiments.

FIG. 15 is a view using a commercially available anti-loosening washer including two sheets.

FIGS. 16(a), 16(b), 16(c), and 16(d) are explanatory views in a case where the washer according to the present invention is used as the washer on a side where an attachment surface Sa is installed.

FIGS. 17(a) and 17(b) are views illustrating other embodiments.

FIG. 18 is an explanatory view of operation of a washer according to another embodiment illustrated in FIGS. 17(a) and 17(b).

FIGS. 19(a), 19(b), and 19(c) are views illustrating still another embodiment.

FIG. 20 is an explanatory view of use of a washer according to still another embodiment illustrated in FIGS. 19(a), 19 (b), and 19 (c).

Description of Embodiments

Hereinafter, embodiments according to the present invention will be described with reference to the drawings, but the present invention is not limited to the following embodiments.

(Embodiment 1)

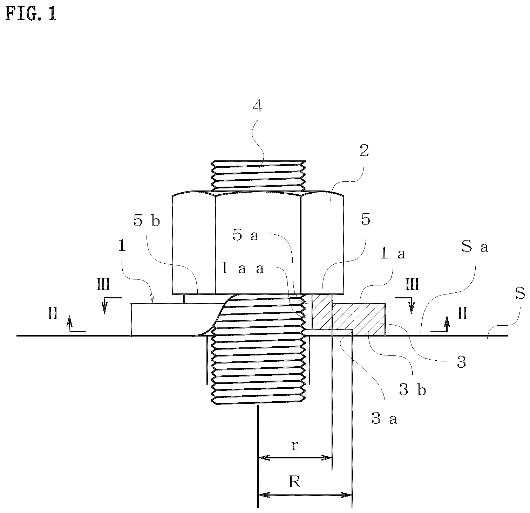

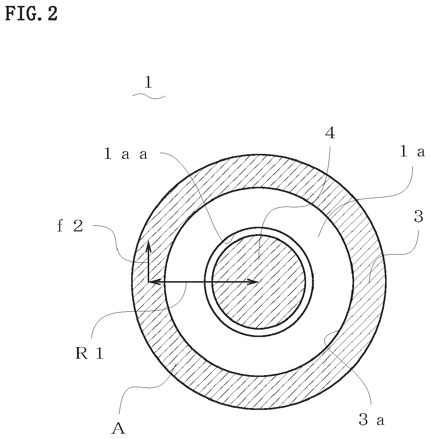

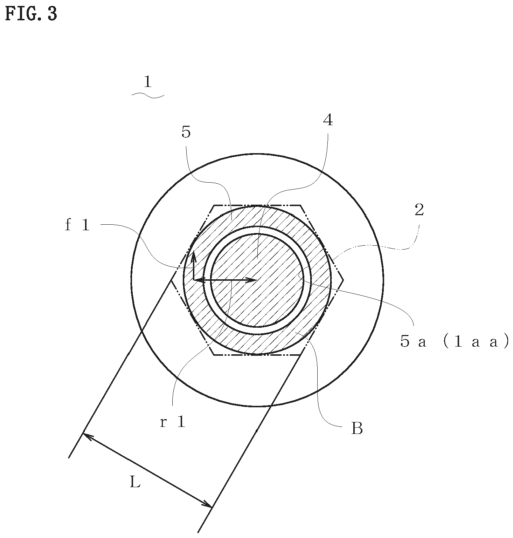

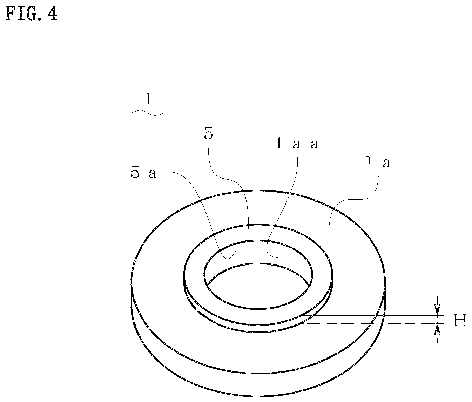

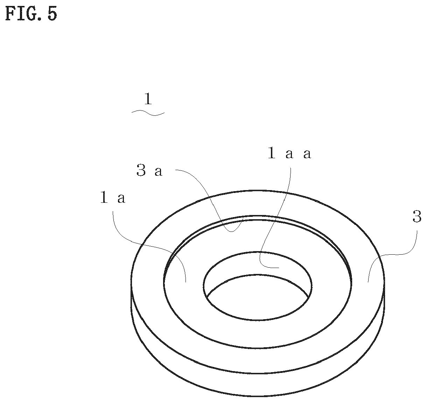

FIG. 1 is a cross-sectional view illustrating a fastening structure using a washer according to Embodiment 1 of the present invention, FIG. 2 is a cross-sectional view taken along line II-II of FIG. 1, FIG. 3 is a cross-sectional view taken along line III-III of FIG. 1, FIG. 4 is a perspective view of an upper surface side of the washer, and FIG. 5 is a perspective view of a lower surface side of the washer.

As illustrated in FIGS. 1 to 5, a washer 1 according to the present invention is used, for example, by being sandwiched between an attachment surface Sa of an object S to be attached to an attachment object (not illustrated) and a nut 2.

In the washer 1, a first annular protrusion 3 (lower surface 3b) protruding from an annular table-shaped washer body 1a toward the attachment surface Sa is formed on a side in contact with the attachment surface Sa of the object S to be attached. The reason why the first annular protrusion 3 (lower surface 3b) thus configured is formed is that if the vicinity of a central portion of a first surface where the washer 1 is in contact with the attachment surface Sa of the object S to be attached is concave, it is possible to avoid direct contact of the central portion of the washer 1 with the attachment surface Sa of the object S to be attached.

In the first annular protrusion 3 (lower surface 3b), an inner peripheral wall surface 3a forming a space to be a central recess has an inner shape (inner diameter) equal to or larger than an outer shape of the nut 2. A center hole 1aa through which a thread rod 4 to which the nut 2 is screwed passes is formed in a center portion of the washer body 1a. The inner peripheral wall surface 3a of the first annular protrusion 3 is preferably concentric with the center hole 1aa.

On the other hand, a second annular protrusion 5 protruding from the washer body 1a toward the nut 2 is formed on a side of the washer 1 that is in contact with the nut 2. An inner peripheral wall surface 5a of the second annular protrusion 5 is continuous with the inner peripheral wall surface of the center hole 1aa. As illustrated in FIG. 3, when the nut 2 for fastening has a hexagonal cross section, the outer shape of the second annular protrusion 5 has a size substantially equal to an interval L between two parallel surfaces (two-face width). The minimum diameter required for the second annular protrusion 5 is the same as the interval L between the two parallel surfaces of the nut 2.

As illustrated in FIG. 1, in a fastened state by the nut 2, a lower surface of the nut 2 (the surface on the object S to be attached side) is in contact only with a narrow contact portion B (that is, an upper surface 5b of the second annular protrusion 5) on the upper surface side of the washer 1. On the other hand, the lower surface side of the washer 1 comes into contact with the attachment surface Sa at a contact portion A (that is, the lower surface 3b of the first annular protrusion 3) having an inner shape equal to or larger than the outer shape of the nut 2.

The outer diameter r of the second annular protrusion 5 is equal to an inner diameter R of the first annular protrusion 3, or the inner diameter R of the first annular protrusion 3 is larger than the outer diameter r of the second annular protrusion 5. That is, these diameters are expressed by the following formula (1) (referring to FIGS. 2 and 3, R1 > r1).

$$R > r \qquad \dots (1)$$

Although the inner diameter R of the first annular protrusion 3 (outer diameter of a recessed portion (central recess)) is drawn to be larger than the outer diameter r of the second annular protrusion 5, the inner diameter R may be slightly smaller than the outer diameter r. What is important is that the recessed portion is formed in the central portion of the washer 2 on the attachment surface Sa side, and the relationship between the inner diameters R and R1 and the outer diameters r and r1 satisfies the formula (1).

When the nut 2 is fastened with respect to the thread rod 4 with the washer 1 interposed therebetween, the lower surface of the nut 2 is tightened while rubbing (sliding) the upper surface of the washer 1 (the upper surface 5b of the second annular protrusion 5); however, the washer 1 does not co-rotate with the nut 2 at all and remains stationary with respect to the attachment surface Sa of the object S to be attached.

Since the washer 1 remains stationary with respect to the attachment surface Sa, as a result, the washer 1 does not damage the attachment surface Sa. This is also confirmed by repeated experiments.

The reason why the washer 1 does not co-rotate with the nut 2 as described above (that is, the nut 2 slides on the upper surface of the washer 1 (the upper surface 5b of the second annular protrusion 5), and the lower surface of the washer 1 (the lower surface 3b of the first annular protrusion 3) does not slide with respect to the attachment surface Sa at all) is due to the following reason (principle of physics).

A frictional force F on a smooth flat surface is obtained by the following formula (2).

$$F = \mu \times W \qquad \dots (2)$$

($\mu$: friction coefficient)
(W: pressing force of the entire object to come into contact)

From the formula (2), it can be seen that the frictional force F relates only to a pressing force W and is proportional to the pressing force W regardless of a size of an area of the contact portion.

Thus, the frictional force f1 applied to the entire contact portion B is as follows:

$$f1 = \mu1 \text{ (friction coefficient)} \times W1 \text{ (pressing force of nut 2)}$$

, and the frictional force f2 applied to the entire contact portion A is as follows:

$$f2 = \mu2 \text{ (friction coefficient)} \times W2 \text{ (pressing force of nut 2)}$$

Since W1 and W2 are the pressing forces of the nut 2, W1 and W2 are the same even if the areas of the contact portions A and B are different, and W1 = W2. Since both the nut 2 and the object S to be attached with which the washer 1 comes into contact are made of iron and made of the same material, the friction coefficients $\mu$1 and $\mu$2 are considered to be substantially equal to each other even if there is a slight difference. Therefore, after all, f1 = f2. Since f1 and f2 have the same value, f1 = f2 = F is assumed in the following description.

Whether or not the washer 1 causes "co-rotation" when the nut 2 is fastened (the same applies also when the nut is loosened) depends on a difference in magnitude between a force (torque = rotational force T1) to rotate the washer 2 by the frictional force f1 of the contact portion B with the nut 2 and a rotational resistance force (T2) acting so that the washer 1 does not rotate with respect to the attachment surface Sa. That is, the following two formulas (3) are obtained.

$$\left.\begin{array}{l} T1 = F(f1) \times r1 \\ T2 = F(f2) \times R1 \end{array}\right\} \quad (3)$$

Here, r1 is an average radius of the contact portion B (see FIG. 3), and R1 is an average radius of the contact portion A (see FIG. 2).

Based on the formula (1), since R1 is larger than r1, the rotational resistance force T2 of the washer 1 is larger than the force T1 by which the nut 2 attempts to rotate the washer 1, and as a result, only the nut 2 rotates without rotating the washer 1.

When a ratio between T2 and T1 is taken, T2/T1 = R1/r1 > 1.0 holds; however, r1 is a value substantially determined by the size of the nut 2 and does not change; therefore, the larger R1 is, the more firmly the washer 1 does not rotate with respect to the attachment surface Sa.

The reason why the center of the lower surface of the washer 1 is recessed is as follows in addition to the reason that R1 is made larger than r1.

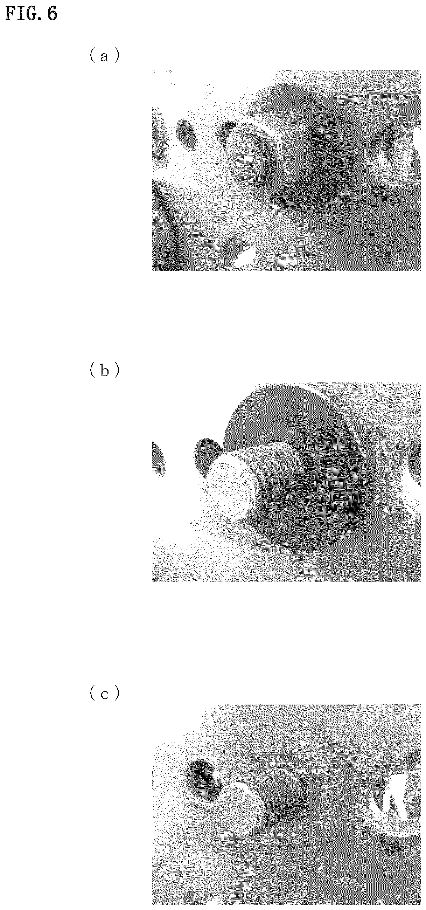

For example, in FIG. 6 (a), what is laid under the nut is a general commercially available flat washer (black) having a somewhat large outer diameter and a somewhat large thickness and subjected to quenching. Then, a paint is applied to the attachment surface, and this is tightened with a force full of proof stress of the bolt.

When the tightening is released, a white nut mark is left as illustrated in FIG. 6(b). As illustrated in FIG. 6(c), when a portion where a back surface of the washer on the attachment surface is in contact is observed, it can be seen that the paint around a center hole of the portion is peeled off, and stress is concentrated thereon. As illustrated in FIG. 6(c), it can be seen that the paint is only in contact with up to about 1/3 between the inner diameter and the outer diameter of the washer (illustrated in a circle with paint) (that is, only to the vicinity of the extent that the nut covers), and there is no other push mark.

This is considered to be because when a commercially available flat washer is tightened, a portion that comes into contact with and presses the attachment surface concentrates on the central portion of the washer, and the central portion of the washer slightly bends due to tightening of the nut, resulting in biased pushing. This is an unavoidable phenomenon.

Table 1 below shows the results of measuring the size of the "push mark" when a flat washer (commercial product: for bolt M16, tightening torque 300 Nm) is tightened.

Table. 1

| Material, etc. | Thickness (mm) | Outer diameter (mm) | Maximum diameter of push mark (mm) |
|---|---|---|---|
| Steel (green wood) | 2. 5 | 3 1. 5 | 25. 0 |
| Stainless steel | a3 | 30 | 25. 5 |
| Steel (quenching) | 4 | 3 1. | 2 5. 1 |
| Stainless steel | 5 | 45 | 26. 5 |
| Steel (quenching) | 6 | 45 | 25. 0 |

As illustrated in Table 1, regardless of the size and thickness of the washer, a maximum diameter of the push mark is 25 to 26.5 mm, which is approximately an intermediate value between a dimension (two-face width) of 24 mm between facing surface portions of a hexagonal nut and a dimension (diagonal distance) of 27.7 mm between facing corner portions of the hexagonal nut. That is, this value is the same as an average dimension of the nut.

As can be seen from this experiment, regardless of the size of the diameter of the washer 1, a portion where the washer is substantially in contact with the attachment surface (portion hitting the attachment surface) is substantially the same as the size of the nut; therefore, r1 and R1 are substantially the same, and a torque with which the nut tends to turn the washer and a torque with which the washer resists to cling to the attachment surface are substantially balanced, so that the washer rotates with respect to the attachment surface. That is evidenced by commercially available flat washers that are co-rotating (accompanyingly rotating).

The washer 1 is manufactured such that a recessed portion is provided at a center of a surface on the attachment surface side to avoid contact of the washer central portion with the attachment surface Sa, and r1 and R1 do not have the same value, that is, R1 is larger (M16 is larger than 26.5 mm, for example.) than the "push mark" described above based on an experiment. The washer 1 as the product of the present invention manufactured in this manner has a very simple shape.

In addition, a surface to be the contact portion A of the washer 1 can be roughened (that is, the touch feeling is not smooth but rough) to intentionally increase the friction coefficient. Thus, there is an advantage that the outer diameter of the washer 1 can be reduced by increasing the friction coefficient.

With respect to the first and second annular protrusions 3 and 5, the height and depth of each unevenness may be about 0.2 to 1.0 mm, and may be about 0.2 to 0.3 mm as long as the height and depth are about M16. This hardly changes depending on the size of the nut and the thickness of the washer. The unevenness may be such that it is felt as protruding when touched by a hand or as recessed when touched by a hand.

In short, the effect is exerted if the central portion of the washer 1 on the attachment surface Sa side does "not touch" the attachment surface Sa, and therefore, it is not necessary to make large the unevenness. Thus, it is not necessary to sharply form corners of stepped portions of the annular protrusions 3 and 5.

Thus, since the shape of the recessed portion (central recess) on an inner side of the contact portion B only needs to be such that the washer central portion does not come into contact with the attachment surface Sa, as illustrated in FIGS. 7(a), 7(b), and 7(c), a recess shape that is merely recessed without having a portion protruding from a flat surface can be formed. In these cases, a washer upper surface is illustrated as a flat surface.

In a washer 1A illustrated in FIG. 7(a), a central recess 1Aa has a recess shape with a rectangular cross section having a constant depth, in a washer 1B illustrated in FIG. 7(b), a central recess 1Ba has a recess shape with a center portion having a constant depth and an outer peripheral portion having an arc shape, and in a washer 1C illustrated in FIG. 7(a), a central recess 1Ca has a recess shape with a triangular cross section having a deeper depth toward the center. 1Ab, 1Bb, and 1Cb are center holes through which the thread rod 4 passes.

As a result of repeated experiments, it has been confirmed that the effect of the washer 1 (that is, such an effect that although the nut 2 side rotates with respect to the washer 1, the washer 1 does not rotate with respect to the attachment surface Sa) is exhibited by making the dimension R of the annular protrusion 3 slightly larger than the outer shape of the nut (or bolt head) even when a height H (see FIG. 4) of the second annular protrusion 5 is zero, that is, even when the height H = 0 mm as illustrated in FIG. 3 and a surface of the washer on the nut 2 side is a flat surface.

The washer for M16 as the product of the present invention was manufactured, and an experiment of actually fastening and loosening the nut was repeated several hundred times; however, it was confirmed that the washer as the product of the present invention never rotates (slips) with respect to the attachment surface, which was a natural physical phenomenon. In addition, although a dynamic test (that is, vibration test) was performed on a tightened one, a phenomenon in which the nut rotates first as a priority order when loosened, and the washer rotates prior to the nut with respect to the attachment surface never occurred.

As described above, the washer 1 as the product of the present invention has a very simple structure, has an excellent effect of protecting the attachment surface Sa without damaging the attachment surface Sa by bolt fastening, and has a very large economic effect since the manufacturing cost is inexpensive.

In the case of fastening using the bolt and the nut, when a bolt diameter is small, the bolt head can be fixed by hand; however, when the bolt diameter is large, the torque for rotating the nut also increases, so that a co-rotation force of the bolt head also increases. In this case, it is required that a spanner or the like holds the bolt head and a handle of the spanner is applied to a wall or the adjacent bolt head to prevent co-rotation of the bolt head.

However, such an operation is not easy, and when the co-rotation force is large, the spanner described above bites into the wall or the adjacent bolt head with a strong force, and a large force is required to remove the spanner after the tightening of the nut is completed. For example, in a case of about M36, it takes time and effort to hammer and remove the spanner with a large hammer in order to remove the spanner, and, in addition, jumping of the spanner may occur.

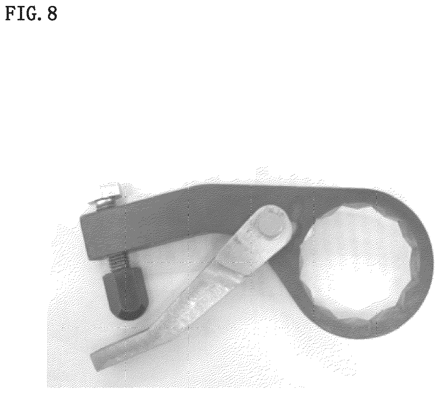

In order to avoid such a situation, a co-rotation prevention tool as illustrated in FIG. 8 is devised and commercially available; however, the structure becomes complicated, and it is expensive.

Thus, in order to solve such a problem, Embodiment 2 will be described next in which the function of the washer of Embodiment 1 is applied, and a recessed groove is additionally processed on one side surface of the washer to provide a function of preventing "co-rotation" of the bolt head.

(Embodiment 2)

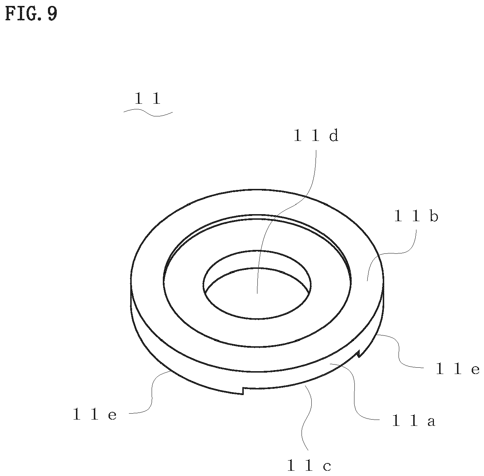

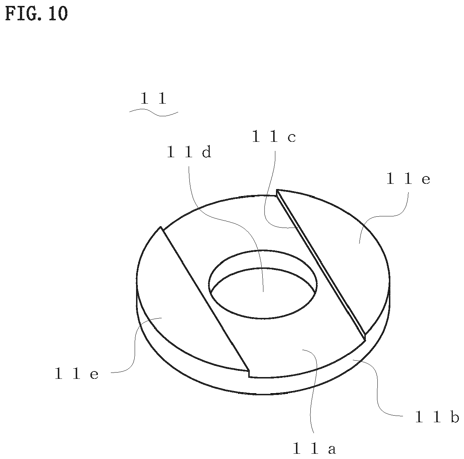

As illustrated in FIG. 9, in a washer 11 as the product of the present invention, on the side in contact with the attachment surface Sa, as in Embodiment 1, an annular protrusion 11b having a recessed central portion is provided to protrude from a washer body 11a. On the other hand, as illustrated in FIG. 10, a linear groove 11c (linear recess) having a constant width is formed in a diameter direction on a side opposite to the side in contact with the attachment surface Sa.

The linear groove 11c has a width that is the same as or slightly larger than the interval L between two parallel surfaces of a head of a hexagonal bolt, and has a size in which the head (or nut) of the hexagonal bolt used for fastening is fitted. Reference numeral 11d denotes a center hole through which the thread rod passes.

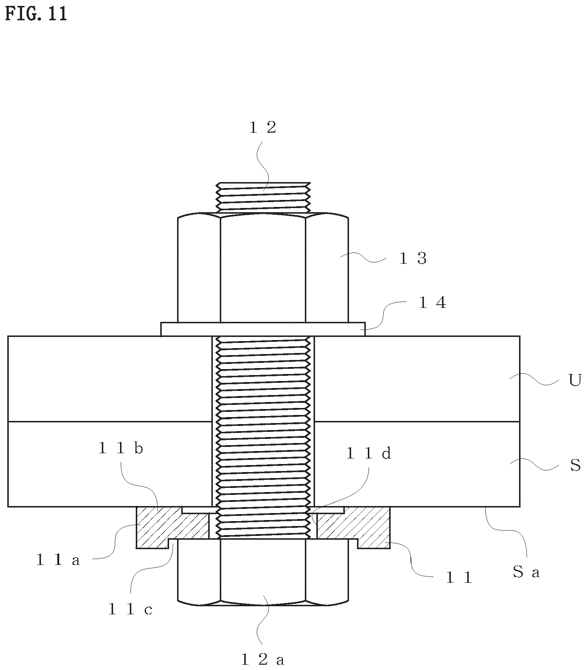

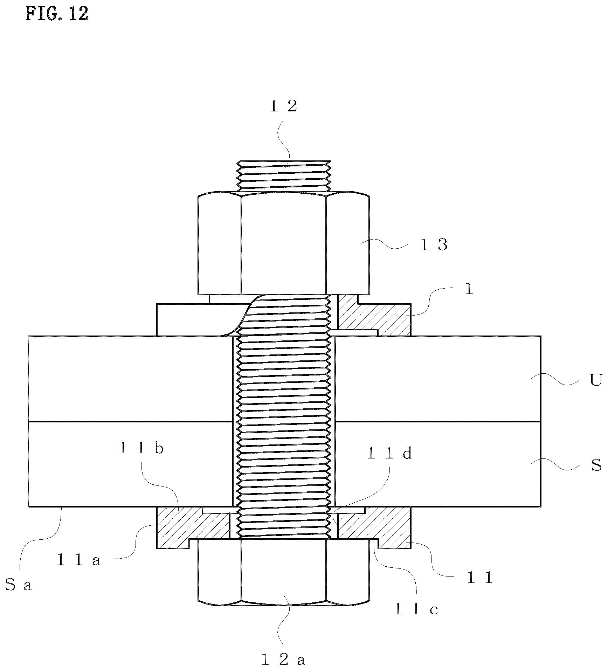

FIG. 11 illustrates a state in which the washer 11 is attached between a bolt head 12a of a bolt 12 and the object S to be attached. A flat washer 14 (commercially available product) is attached to a side of a nut 13 in the fastening structure for attaching the object S to be attached to an attachment object U. As illustrated in FIG. 12, the washer 1 according to Embodiment 1 may be used instead of the flat washer 14.

As described above, by simply disposing the washer 11 on a lower side of the bolt head 12a, even if the nut 13 is rotated and tightened, the bolt 12 (bolt head 12a) does not co-rotate.

The principle by which co-rotation of the bolt head 12a can be prevented is as follows. There is a formula widely known in physics when the nut 13 is tighten.

$$T = K \times W \times d \ (\text{or } W = T/(K \times d)) \qquad \qquad \ldots (4)$$

(T: Tightening torque of nut (= force to rotate nut))
(d: Bolt diameter)
(W: Tightening axial force of bolt, that is, "pressing force" with which nut presses attachment surface)
(K: Physical constant calculated from "friction coefficient where nut lower surface and attachment surface (seat surface) are rubbed with each other" and "friction coefficient where female screw portion of nut and male screw portion of bolt are rubbed with each other")

If both friction coefficients are calculated as the "same" value $\mu$, the following formula (5) is obtained.

$$\left.\begin{array}{l} \cdot \text{When } \mu = 0.05\text{: } K = 0.079 \\ \text{ (Very smooth state with high-grade lubrication due to contact between irons)} \\ \cdot \text{ When } \mu = 0.1\text{: } K = 0.14 \text{ (case of normal machine oil)} \\ \cdot \text{ When } \mu = 0.2\text{: } K = 0.26 \text{ (case where surface finish is rough)} \end{array}\right\} \quad \dots (5)$$

Conversely, when the bolt 12 is tightened with the nut 13, about 50% of tightening torque is consumed by friction between the nut 13 and the attachment surface, about 40% is consumed by friction between a female screw portion of the nut 13 and a male screw portion of the bolt 12, and about 10% is used for tightening force (bolt axial force). This is physical knowledge well known among parties.

That is, in the phenomenon that the bolt head "co-rotates", when the nut is tightened with a torque T, as described above, about 40% of the tightening torque is consumed by the friction between the female screw portion of the nut 13 and the male screw portion of the bolt 12; therefore, the torque of "T × 40%" is transmitted to the male screw portion of the bolt 12 by the frictional force, and this becomes the torque tending to turn the bolt head 12a of the bolt 12.

If this torque is T0, the following formula (6) is obtained.

$$T0 = T \times 0.4 \quad \dots (6)$$

Next, the above phenomenon in which the nut 13 is rotated and tightened in the state where the washer 11 according to Embodiment 2 is attached is as follows when viewed from the bolt head 12a side.

When the nut 13 side is rotated by the torque T, the bolt head 12a attempts to "co-rotate" by the torque of T0 (T × 40%); however, the co-rotation is hindered by the linear groove 11c provided in the washer 11, and the bolt head 12a does not rotate alone, and attempts to accompanyingly rotate integrally with the washer 11.

On the other hand, in the same manner as the contact portion A of the washer 1, in the washer 11, a force (torque T2 resisting rotation) to cling to the attachment surface Sa (in order to prevent the washer 11 from rotating) is T2 = (attachment surface pressing force W) × (attachment surface friction coefficient $\mu$) × (distance R) from the above formulas (2) and (3).

Therefore, when the nut 13 is fastened with the torque T, a ratio of T2 (torque around which the washer 11 is resistant to rotate) to T0 (torque that attempts to co-rotate the washer 11) is expressed as follows:

$$T2/T0 = (W \times \mu \times R)/(T \times 0.4)$$

where since "T × 0.4" is W = T/(K × d) from the formulas (6) to (4),

$$= [\{T/(K \times d))\} \times \mu \times R]/(T \times 0.4)$$

$$= (R \times \mu)/(0.4 \times K \times d).$$

When R is represented by a diameter D, R = D/2, and thus, the following is obtained.

$$T2/T0 = (D \times \mu)/(0.8 \times K \times d)$$

According to the formula (5), since K = 0.079 when the friction coefficient $\mu$ = 0.05, K = 0.14 when the friction coefficient $\mu$ = 0.1, and K = 0.26 when the friction coefficient $\mu$ = 0.2, the following formula (7) is obtained.

$$T2/T0 = D/1.3d$$
$$T2/T0 = D/1.1d$$
$$T2/T0 = D/1.04d$$
$$\left. \right\} \quad (7)$$

From the above calculation, in order to prevent co-rotation of the bolt head 12a (that is, in order for the ratio of T2 to T0 to be a value of 1.0 or more), a recess diameter on the side of the contact portion A in contact with the attachment surface Sa of the washer 11 only needs to be approximately 1.3 times or more the bolt diameter even in a disadvantageous case where the friction coefficient is the smallest (case of the formula (7)).

When calculation is the case of M16, the recess diameter of the washer may be 21 mm (= 16 × 1.3) or more. Incidentally, since the outer diameter of the washer for the commercially available M16 is about 32 mm, it is sufficiently possible to form such a recess diameter on the inner side with the outer diameter size as it is, and it is not necessary to provide a washer having an extremely large outer diameter even if necessary.

Similarly, for example, in the case of the M36, since a necessary recess diameter is about 47 mm and the outer diameter of a general commercially available flat washer is about 66 mm, there is a sufficient margin, and the same can be said.

If Embodiments 1 and 2 are combined in pairs and used as illustrated in FIG. 12, even if the nut 13 is tightened, the two washers 1 and 11 do not rotate, so that the contact portions on the nut 13 side and the bolt head 12a side are not scratched, and the contact portions of the washers 1 and 11 are protected. In addition, since the bolt head 12a side does not co-rotate, a special anti-rotation tool or the like are not required, and ideal bolt fastening work can be performed.

As described above, the embodiments of the present invention have been described with reference to the drawings, and various additions and modifications can be made without departing from the gist of the present invention.

(i) For example, in the embodiment illustrated in FIG. 1, the present invention is applied to the washer provided between the nut and the attachment surface of the object to be attached; however, the present invention is not limited thereto, and can be similarly applied to the washer provided between the bolt head and the object to be attached.

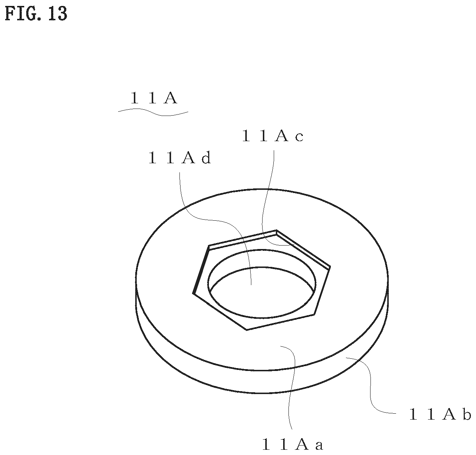

(ii) In the embodiment illustrated in FIG. 10, the linear groove 11c in which the nut or the bolt head is fitted is formed in order to prevent the nut or the bolt from rotating with respect to the washer; however, as illustrated in FIG. 13, instead of forming the linear groove 11c thus configured, a hexagonal recess 11Ac (alternately, dodecagonal recess (that is, double hexagonal recess)) having a shape (that is, dimensional size with the same size) corresponding to the nut or the bolt head as viewed from a direction orthogonal to the surface may be formed on the surface of the washer 11A. This is because such a recess shape makes it easy to manufacture a small-diameter bolt by pressing or the like in the manufacture.

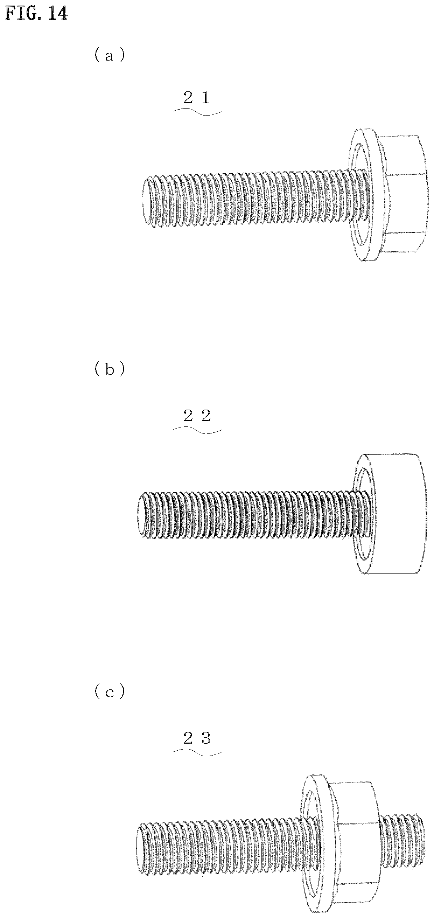

(iii) In the embodiment illustrated in FIGS. 1 to 7, a combination of "bolt + washer" is used; however, as illustrated in FIGS. 14(a), 14(b), and 14(c), even when the nut or the bolt (bolt head) and the washer are integrally molded, this case is also included in the present invention. For example, as illustrated in FIG. 14(a), the bolt (bolt head) and the washer can be integrally molded to provide a hexagon headed bolt 21 having a non-rotating function. Here, one of the reasons why the bolt head has a hexagonal cross section is to prevent accompanying rotation by catching by a spanner or the like when the nut is tightened.

If the bolt head does not rotate, the catching by the spanner or the like is unnecessary, the bolt head can be formed into a round shape while maintaining the non-rotating function, and as illustrated in FIG. 14(b), a bolt 22 with a round head can be provided. Such a configuration makes it possible to manufacture the headed bolt at a lower cost than processing the head having a hexagonal cross section. The shape may not be a perfect circle, and may be any polygon.

Since the design can be freely changed, even when it is desired to complete tightening by giving directionality to the bolt head in appearance (for example, an arrow and the like are attached), the tightening can be completed without deviating from an initial setting position.

In addition, a non-rotating washer and the hexagonal nut can be integrally molded, and provided in the middle of the thread rod portion as illustrated in FIG. 14(c) to provide a penetration bolt 23. When the bolt is fastened, the headed bolt is not always used. It is often the case that nuts are installed at both ends of one penetration bolt without a head. In such a case, when one nut is rotated for tightening/loosening, the nut at the other end tends to cause accompanying rotation; however, as illustrated in FIG. 14(c), the nut having a function of preventing the accompanying rotation is obtained, and the utility value increases.

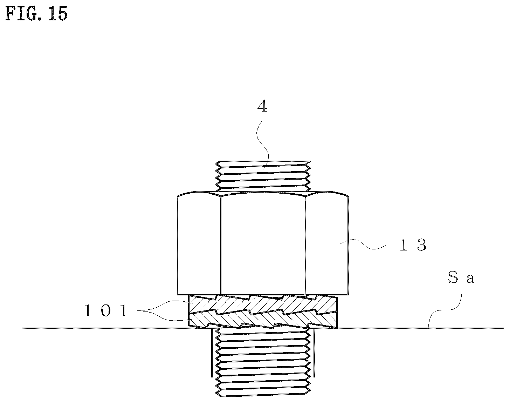

(iv) Meanwhile, in a case where first washers 101,101 (for example, see JP S48-4142 B and GB 1043843 A), which is a commercially available anti-loosening washer including two sheets, which has unevenness due to an inclined surface on a surface thereof, is installed between the nut 13 and the attachment surface Sa and used as illustrated in FIG. 15, when the nut 13 rotates to the loosening side due to vibration, the two first washers 101 slide with each other, and the volume expands, so that the nut 13 is not loosened.

At this time, a mark due to the unevenness of the first washer 101 is formed as a scratch, and the attachment surface Sa is damaged. In addition, when the attachment surface Sa is so hard as not to be scratched, there is a problem that the washer 101 slips with respect to the attachment surface Sa and does not perform an anti-loosening function.

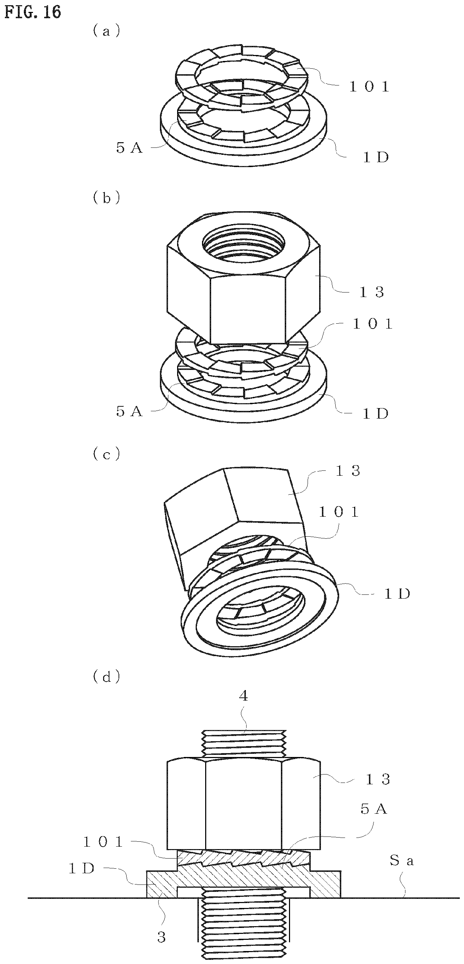

In this case, as illustrated in FIGS. 16(a) to 16(d), among the two washers, a second washer 1D, which is a non-rotating washer, may be used as the washer on the side to be installed on the attachment surface Sa, and the shape of the back surface (surface on the attachment surface Sa side) may be set such that a friction effective diameter of the first annular protrusion 3 on the back surface side is larger than an effective diameter of the lower surface of the nut 13. Even if there is no unevenness on the back surface side of the second washer 1D with respect to the attachment surface Sa, the second washer 1D does not slip, so that the attachment surface Sa is not damaged. On an upper surface of the second washer 1D, a protrusion 5A is formed which has unevenness meshing with unevenness of the first washer 101.

At the same time, even when hardness of the attachment surface is high and the attachment surface is not caught by unevenness of the back surface of the first washer 101 (in this case, anti-loosening of the washer does not function), the washer does not slip due to the effect of the second washer 1D, so that the effect of the first washer 101 is not deteriorated.

As described above, by using the second washer 1D which is a non-rotating washer, the outer shape of the washer on a floor surface becomes large, and an advantageous function is exhibited. That is, the floor surface side of the second washer 1D is a flat surface, and the second washer 1D is considered to be likely to slip instinctively because of the flat surface; however, in practice, the effect of the size of an effective friction diameter applied to the attachment surface is superior to the effect of the frictional force of unevenness (= the friction effective diameter is small), and the second washer 1D does not slip.

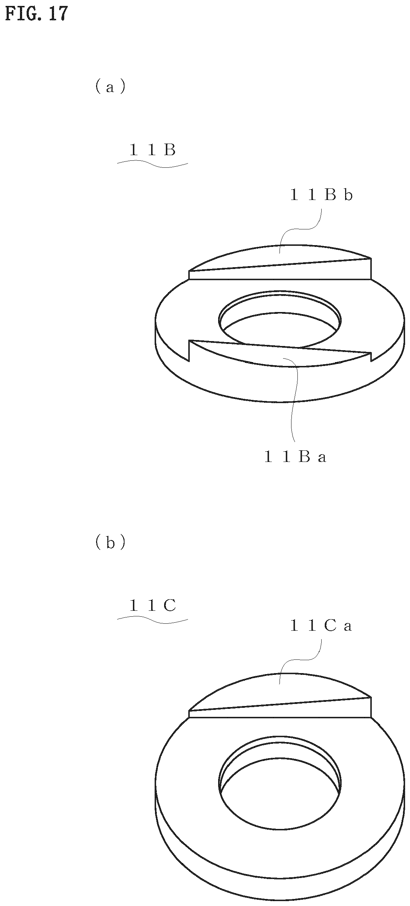

(v) As illustrated in FIGS. 9 and 10, when a shoulder portion 11e (side protrusion) is provided on the side opposite to the side in contact with the attachment surface Sa to form the linear groove 11c (linear recess) having a constant width in the diameter direction, it is desirable that shoulder portions 11Ba and 11Bb of a washer 11B have a shape of an inclined surface as illustrated in FIG. 17(a).

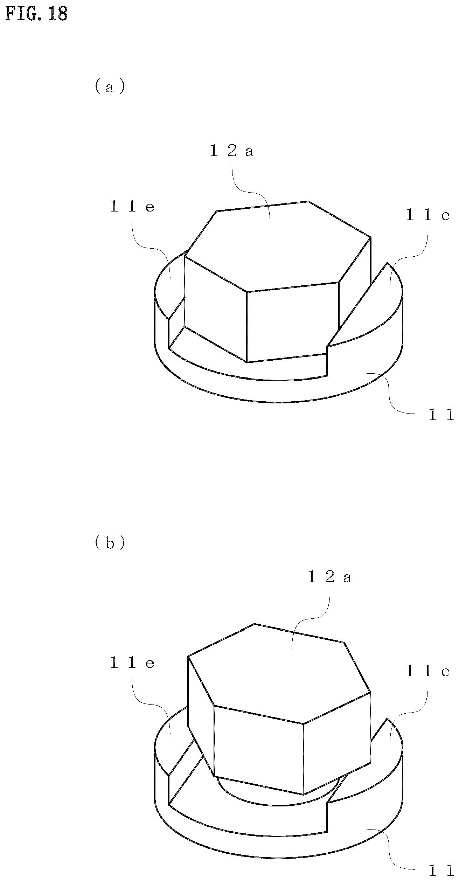

It composes in this way because, when the washer is installed immediately below the bolt head 12a, in the case of using the washer 11 (see FIGS. 9 and 10), the state illustrated in FIG. 18(a) may be not realized, but the bolt head 12a may ride on the shoulder portion 11e to realize the state illustrated in FIG. 18(b), and therefore, this is avoided. This is an installation error that occurs because the bolt head 12a cannot be seen from the side on which the nut is fastened (bolt head cannot be seen because the bolt head is on the back side of the floor surface). The nut is rotated without noticing this, and fastening is ended as it is, so that the state illustrated in FIG. 18(b) is obtained. In such a state, the bolt is instantly loosened by slight vibration.

Thus, for example, as illustrated in FIG. 17(a), by improving the shape of the washer, even when a corner portion of the bolt head 12a is placed on the shoulder portions 11Ba and 11Bb (side protrusions) of the washer 11B as illustrated in FIG. 18(b) at the beginning of fastening the nut, upper surfaces of the shoulder portions 11Ba and 11Bb are inclined surfaces whose heights gradually decrease in a counterclockwise direction (that is, counterclockwise); therefore, when the nut is slightly rotated on the fastening side, the bolt head 12a that cannot be seen on the nut fastening side automatically accompanyingly rotates and slips along the inclined surface, and can be smoothly fitted into a normal position (see FIG. 18(a)).

Such shoulder portions (side protrusions) do not need to be provided at left and right side portions of the washer, and may be provided only on at least one of the left and right side portions. That is, like the washer 11C illustrated in FIG. 17(b), a shoulder portion 11Ca may be provided only on one (one side) of the left and right side portions, and the performance does not change. A side surface on a center side of the shoulder portions 11Ba, 11Bb, and 11Ca does not need to be a flat surface, and may be a surface that restricts rotation of the nut or the bolt. In addition, the inclined surface of the shoulder portion gradually decreases in height counterclockwise.

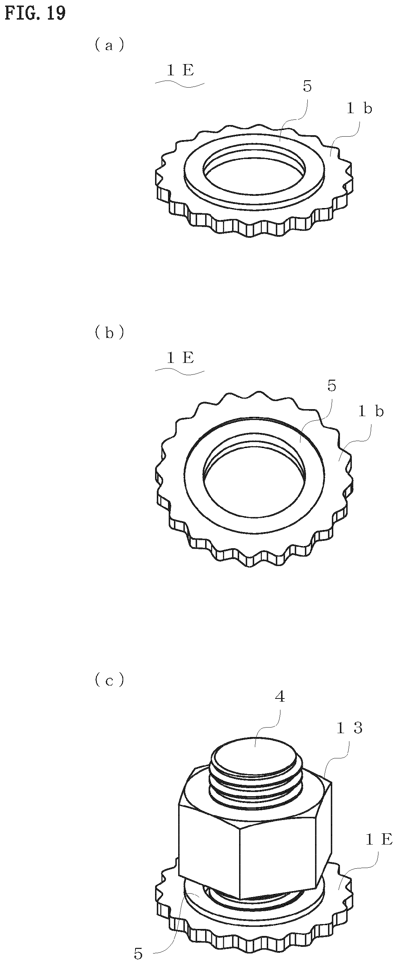

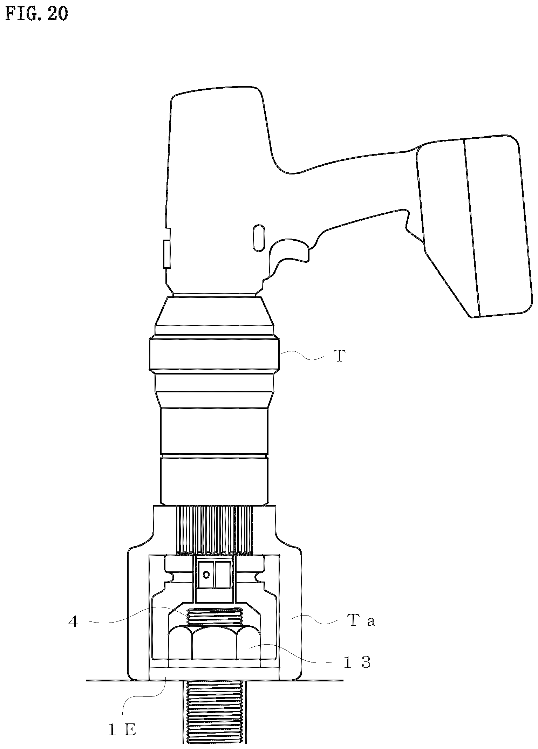

(vi) Although a reaction force receiver is essential in a commercially available screw fastening machine, in the washer according to the present invention, for example, a washer 1E does not rotate even when the nut rotates as illustrated in FIGS. 19(a), 19(b), and 19(c). That is, if a spline-shaped (or polygonal) uneven portion is provided over the entire outer periphery of a washer body 1b and the reaction force is taken at the portion, as illustrated in FIG. 20, an outer cover Ta fixed to a screw fastening machine T is fitted to the uneven portion of the outer periphery of the washer body 1b, so that the bolt fastening work can be performed using the screw fastening machine T without the reaction force receiver. Thus, it is possible to avoid a situation in which a hand is pinched in the reaction force receiver.

Reference Signs List

1, 1A, 1B, 1C, 1D, 1E     washer

| | |
|---|---|
| 1Aa, 1Ba, 1Ca | central recess |
| 1a, 1b | washer body |
| 1aa, 1Ab, 1Bb, 1Cb | center hole |
| 2 | nut |
| 3 | first annular protrusion |
| 3a | inner peripheral wall surface |
| 3b | lower surface |
| 4 | thread rod |
| 5, 5A | second annular protrusion |
| 5a | inner peripheral wall surface |
| 5b | upper surface |
| 11, 11A | washer |
| 11a, 11Aa | washer body |
| 11b, 11Ab | annular protrusion |
| 11c | linear groove |
| 11Ac | recess |
| 11d, 11Ad | center hole |
| 11e, 11Ba, 11Bb, 11Ca | shoulder portion |
| 12 | bolt |
| 12a | bolt head |
| 13 | nut |
| 21, 22, 23 | bolt |
| A, B | contact portion |
| H | height |
| L | interval |
| S | object to be attached |
| Sa | attachment surface |
| R, r | distance |
| U | attachment object |

**Claims**

1. A washer that is used by being sandwiched between an attachment surface of an object to be attached and a nut or a bolt head, the washer comprising:

   a washer body; and
   a central recess formed on a side of the attachment surface of the washer body, wherein an inner shape of the central recess is equal to or larger than an outer shape of the nut or the bolt head.

2. The washer according to claim 1, wherein a first annular protrusion is formed on the attachment surface side of the washer body, and
   the central recess is formed by the first annular protrusion.

3. The washer according to claim 1 or 2, being integrally molded with the nut or the bolt head.

4. The washer according to claim 1 or 2, wherein a second annular protrusion is formed on a side of the nut or the bolt head of the washer body, and
   an outer shape of the second annular protrusion is equal to or smaller than the outer shape of the nut or the bolt head.

5. The washer according to claim 1, 2, or 4, wherein the nut or bolt head side of the washer body is a flat surface.

6. The washer according to claim 1, 2, or 4, wherein a surface of the washer body on the nut or bolt head side is formed with a recess having a shape corresponding to the nut or the bolt head as viewed from a direction orthogonal to the surface and in which the nut or the bolt head is fitted.

7. The washer according to any one of claims 1 to 3, wherein a side protrusion is provided at least one of left and right side portions on the nut or bolt head side of the washer body, and

a side surface on a center side of the side protrusion is a surface that restricts rotation of the nut or the bolt.

8. The washer according to any one of claims 1 to 3, wherein side protrusions are provided at the left and right side portions on the nut or bolt head side of the washer body,

a linear recess is formed between the side protrusions, and
a width of the recess is the same as or slightly larger than a width of the nut or the bolt head.

9. The washer according to claim 7 or 8, wherein the side protrusion is formed such that a height of an upper surface gradually decreases in a counterclockwise direction.

10. The washer according to claim 2, wherein the first annular protrusion has a height of about 0.2 to 1.0 mm.

11. The washer according to any one of claims 1 to 10, wherein a spline-shaped or polygonal unevenness into which a fitting portion of a tightening tool is detachably fitted is formed around the washer body.

12. A fastening structure that is attached by sandwiching a washer between an attachment surface of an object to be attached and a nut or a bolt head, the washer being the washer according to any one of claims 1 to 11.

13. A fastening structure that fixes an object to be attached to an attachment object using a nut and a bolt, the fastening structure comprising

a washer in which a central recess having a diameter larger than an outer shape of the nut or the bolt head is formed on a lower side of one of the nut and the bolt head on a side opposite to the nut or the bolt head being provided, and
another washer in which a linear recess is formed on a side of the nut or the bolt head on a lower side of the other of the nut and the bolt head and a width of the recess is equal to a width of the nut or the bolt head or slightly larger than the nut or the bolt head being provided.

14. A fastening structure that fixes an object to be attached to an attachment object using a nut and a bolt, the fastening structure comprising:

on a lower side of one of the nut and the bolt head, a first washer having unevenness on front and back surfaces being provided on a side of the nut or the bolt head;
a second washer being provided between the first washer and the object to be attached;
in the second washer, an annular recess having on a tip surface, unevenness to be engaged with unevenness of the first washer being formed in the first washer, and a central recess having an inner shape equal to or larger than an outer shape of the nut or the bolt head being formed on a side of the object to be attached.

FIG. 1

EP 4 148 288 A1

FIG. 2

FIG. 3

FIG. 4

FIG. 5

FIG. 6

( a )

( b )

( c )

FIG. 7

(a)

1 A    1 A b

1 A a

(b)

1 B    1 B b

1 B a

(c)

1 C    1 C b

1 C a

FIG. 8

FIG. 9

FIG. 10

FIG. 11

FIG. 12

FIG. 13

FIG. 14

( a )

2 1

( b )

2 2

( c )

2 3

FIG. 15

FIG. 16

(a)

101

5 A

1 D

(b)

13

101

5 A

1 D

(c)

13

101

1 D

(d)

4

13

5 A

101

1 D

S a

3

FIG. 17

（a）

11B

11Bb

11Ba

（b）

11C

11Ca

FIG. 18

（a）

12a

11e

11e

11

（b）

12a

11e

11e

11

FIG. 19

(a)

(b)

(c)

FIG. 20

## INTERNATIONAL SEARCH REPORT

| International application No. |
|---|
| PCT/JP2021/007321 |

**A. CLASSIFICATION OF SUBJECT MATTER**
Int. Cl. F16B43/00(2006.01)i
FI: F16B43/00 Z

According to International Patent Classification (IPC) or to both national classification and IPC

**B. FIELDS SEARCHED**

Minimum documentation searched (classification system followed by classification symbols)
Int. Cl. F16B43/00

Documentation searched other than minimum documentation to the extent that such documents are included in the fields searched
Published examined utility model applications of Japan       1922-1996
Published unexamined utility model applications of Japan   1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2002-89535 A (JAPAN NUCLEAR CYCLE DEVELOPMENT INSTITUTE) 27 March 2002, paragraphs [0012]-[0016], fig. 4-7 | 1-2, 4-5, 10<br>3, 6-8, 11-13<br>9, 14 |
| Y | JP 2003-527544 A (SCHATZ AG) 16 September 2003, paragraphs [0009]-[0011], fig. 1 | 3, 7-8, 11-12 |
| Y | JP 2019-105363 A (FINDMOLD CO., LTD.) 27 June 2019, paragraphs [0028], [0068], [0069], fig. 2, 6, 7 | 6-8, 11-13 |
| Y | JP 2003-526057 A (SMOLAREK HANNA MARIA) 02 September 2003, paragraph [0068], fig. 13 | 11-12 |

☒ Further documents are listed in the continuation of Box C.          ☒ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 17.03.2021 | 06.04.2021 |

| Name and mailing address of the ISA/<br>      Japan Patent Office<br>      3-4-3, Kasumigaseki, Chiyoda-ku,<br>      Tokyo 100-8915, Japan | Authorized officer<br><br>Telephone No. |

Form PCT/ISA/210 (second sheet) (January 2015)

## INTERNATIONAL SEARCH REPORT

| | International application No. |
|---|---|
| | PCT/JP2021/007321 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2019-60490 A (THE BOEING CO.) 18 April 2019, paragraph [0021], fig. 9 | 13 |
| A | JP 3008703 U (APTO KK) 20 March 1995, paragraphs [0017]-[0027], fig. 1-4 | 1-14 |

Form PCT/ISA/210 (continuation of second sheet) (January 2015)

**INTERNATIONAL SEARCH REPORT**
Information on patent family members

International application No.

PCT/JP2021/007321

| Patent Documents referred to in the Report | Publication Date | Patent Family | Publication Date |
|---|---|---|---|
| JP 2002-89535 A | 27.03.2002 | (Family: none) | |
| JP 2003-527544 A | 16.09.2003 | US 2003/0039527 A1 paragraphs [0018]-[0020], fig. 1 | |
| JP 2019-105363 A | 27.06.2019 | US 2019/0178281 A1 paragraphs [0035], [0075], [0076], fig. 2, 6, 7 | |
| JP 2003-526057 A | 02.09.2003 | US 2003/0077143 A1 paragraph [0127], fig. 13 | |
| JP 2019-60490 A | 18.04.2019 | US 2019/0097407 A paragraph [0032], fig. 9 | |
| JP 3008703 U | 20.03.1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60098210 A
- JP S484142 B
- GB 1043843 A